(19) **Europäisches Patentamt**
**European Patent Office**
**Office européen des brevets**

(11) **EP 3 084 331 B1**

(12) # FASCICULE DE BREVET EUROPEEN

(45) Date de publication et mention
de la délivrance du brevet:
**21.02.2018 Bulletin 2018/08**

(21) Numéro de dépôt: **14828179.3**

(22) Date de dépôt: **12.12.2014**

(51) Int Cl.:
*F27B 9/02* *(2006.01)*　　*F27B 13/06* *(2006.01)*
*F27D 3/06* *(2006.01)*　　*B66C 17/06* *(2006.01)*
*F27D 3/12* *(2006.01)*　　*C25C 3/12* *(2006.01)*
*F27B 9/26* *(2006.01)*

(86) Numéro de dépôt international:
**PCT/FR2014/000282**

(87) Numéro de publication internationale:
**WO 2015/092162 (25.06.2015 Gazette 2015/25)**

(54) **CHARIOT ET MACHINE POUR L'EXPLOITATION D'UN FOUR DANS UNE INSTALLATION DE CUISSON D'ANODES**

WAGEN UND MASCHINE ZUM BETRIEB EINES OFENS IN EINER ANODENBEFEUERUNGSANLAGE

CARRIAGE AND MACHINE FOR OPERATING A FURNACE IN AN ANODE-FIRING FACILITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2013 FR 1302964**

(43) Date de publication de la demande:
**26.10.2016 Bulletin 2016/43**

(73) Titulaire: **FIVES ECL**
**59790 Ronchin (FR)**

(72) Inventeur: **DAVID, Stéphane**
**F-59160 Lomme (FR)**

(74) Mandataire: **Cabinet Plasseraud**
**66, rue de la Chaussée d'Antin**
**75440 Paris Cedex 09 (FR)**

(56) Documents cités:
**DE-A1-102008 030 872　US-A1- 2013 276 580**

- **MANNWEILER U ET AL: "Process control in an anode bake furnace fired with heavy oil", LIGHT METALS. NEW ORLEANS, FEB. 17 - 21, 1991; [PROCEEDINGS OF THE TMS ANNUAL MEETING], WARRENDALE, TMS, US, vol. MEETING 120, 17 février 1991 (1991-02-17), pages 667-671, XP002356253, ISBN: 978-0-87339-161-0**

**Description**

La présente invention concerne un chariot pour l'exploitation d'un four dans une installation de cuisson d'anodes pour l'électrolyse de l'aluminium. L'invention concerne également une machine comprenant un pont roulant et un tel chariot mobile sur le pont roulant, ainsi qu'une installation de cuisson d'anodes pour l'électrolyse de l'aluminium, comprenant un bâtiment contenant un four et une telle machine.

Les anodes utilisées pour la production d'aluminium métal selon le procédé de Hall-Héroult (c'est-à-dire par électrolyse de l'alumine en solution dans un bain d'électrolyte) sont obtenues par moulage d'une pâte carbonée et par cuisson à une température de l'ordre de 1200°C. La cuisson est effectuée dans des fours comprenant le plus souvent plusieurs chambres adjacentes elles-mêmes divisées en alvéoles par des cloisons chauffantes à l'intérieur desquelles circulent de l'air et des gaz de combustion fournis par des brûleurs.

De nombreuses opérations nécessaires à l'obtention des anodes cuites sont réalisées par différents outils montés sur un chariot mobile au-dessus des alvéoles, le chariot comportant un poste de pilotage d'où un opérateur peut commander et manipuler ces outils.

Les anodes à cuire - anodes « crues » - sont empilées dans les alvéoles au moyen d'une pince de préhension montée sur le chariot, et entièrement noyées dans une matière granulaire ou pulvérulente appelée poussier. Le poussier sert à protéger les anodes lors de la cuisson, en particulier de l'oxydation qu'elles pourraient subir du fait de la température de cuisson élevée.

Lorsqu'il n'est pas dans des alvéoles, le poussier est contenu dans un réservoir comportant un conduit de remplissage. Le réservoir est monté sur le chariot de façon à pouvoir être déplacé au-dessus du four pour amener le conduit de remplissage au-dessus de chaque alvéole à remplir.

Au cours d'un cycle de cuisson, les brûleurs sont progressivement déplacés par rapport aux chambres, de sorte que chaque charge d'anode, dans une chambre donnée, est successivement préchauffée, soumise à la cuisson, puis refroidie. Ce type de fours est appelé " four à feu tournant " ("ring furnace" en anglais). Une fois les anodes refroidies, elles sont évacuées hors des alvéoles, au moyen de la pince de préhension montée sur le chariot. Le poussier contenu dans ces alvéoles est alors aspiré par un tuyau d'aspiration monté sur le chariot puis réintroduit dans le réservoir en vue du remplissage ultérieur d'une autre alvéole.

La cadence de production des anodes dans les installations de cuisson doit être très importante. En effet, les usines d'électrolyse, généralement situées à proximité des installations de cuisson, comprennent de très nombreuses cellules d'électrolyse (plusieurs centaines par exemple). Et dans chaque cellule d'électrolyse sont disposées plusieurs anodes, voire quelques dizaines d'anodes qui sont progressivement consommées par l'électrolyse, en une vingtaine de jours en moyenne.

Il s'ensuit que les fours et les divers appareils nécessaires à l'opération de cuisson des anodes fonctionnent en permanence. En particulier, certains des outils montés sur le chariot, comme la pince de préhension des anodes ou le système permettant le remplissage des alvéoles en poussier, en particulier le conduit de remplissage, et les différents dispositifs associés, sont constamment sollicités.

En conséquence, ces outils présentent un risque important d'usure et de dysfonctionnements. Le chariot et ces outils nécessitent donc une maintenance considérable pouvant conduire à des arrêts temporaires de l'installation de cuisson des anodes, ce qui n'est évidemment pas souhaitable.

Il est connu de doubler au moins certains des outils montés sur le chariot, à la fois pour augmenter la cadence de production - en permettant de mener simultanément la même opération sur deux alvéoles distinctes - et pour éviter, en cas de défaillance de l'un des outils, l'arrêt de l'installation, le deuxième outil permettant de réaliser la même fonction que l'outil défaillant.

Toutefois, de tels chariots existants sur lesquels certains outils sont doublés présentent un certain nombre d'inconvénients.

Ainsi, les deux outils d'un même type peuvent ne pas pouvoir accéder chacun à l'ensemble des alvéoles du four. Très souvent, l'une des alvéoles extrêmes ne peut être atteinte que par l'un seulement des deux outils. Il s'ensuit que le chariot ne répond pas pleinement à l'objectif de redondance des outils du même type, pour palier une éventuelle défaillance, ni à l'objectif d'augmentation de la cadence de production.

Par ailleurs, sur les chariots connus, la mise en place d'un plus grand nombre d'outils implique une augmentation de l'encombrement du chariot et de son poids. Ceci a des conséquences sur les dimensions et la structure du pont roulant sur lequel le chariot peut se déplacer, ainsi que sur les dimensions globales de l'installation. Ceci n'est pas souhaitable pour des problèmes de coût et de place disponible.

De plus, les chariots connus qui comportent un plus grand nombre d'outils ont généralement un agencement relativement dense pouvant nuire à l'accessibilité aux différents dispositifs portés par le chariot, notamment lors de la maintenance, mais également à la bonne visibilité de l'opérateur sur le four et les alvéoles sur lesquelles il intervient.

La présente invention vise à remédier aux inconvénients mentionnés ci-dessus.

A cet effet, et selon un premier aspect, l'invention concerne un chariot pour l'exploitation d'un four dans une installation de cuisson d'anodes pour l'électrolyse de l'aluminium selon la revendication 1, le four comprenant une pluralité d'alvéoles s'étendant chacune sensiblement selon une direction longitudinale (X) et disposées les unes à côté des autres selon une direction transversale (Y), l'entraxe des alvéoles - défini comme la distance transversale entre les plans longitudinaux médians de deux alvéoles adjacentes - étant sensiblement constant, le chariot étant conçu pour se déplacer selon la direction transversale au-dessus des alvéoles et possédant un plan longitudinal médian.

Dans le domaine de la présente invention, c'est-à-dire l'exploitation d'un four dans une installation de cuisson d'anodes, on entend par anode, le bloc anodique obtenu par moulage d'une pâte carbonée, avant ou après cuisson. Dans un autre domaine tel que celui de l'exploitation d'une installation d'électrolyse de l'aluminium, le terme anode peut être utilisé à la place d'ensemble anodique, c'est-à-dire un ensemble englobant non seulement un ou plusieurs blocs anodiques, mais également une tige d'anode supportant le ou les blocs anodiques et destinée à être fixée sur un cadre anodique de l'installation d'électrolyse, ce qui n'est pas le cas dans le domaine de la présente invention.

Pour alléger la description, le terme anode sera systématiquement utilisé dans ce qui suit à la place de bloc anodique.

Selon un autre aspect de l'invention, le chariot comporte un ensemble d'outils agencés pour être introduits chacun dans une alvéole. De préférence, l'ensemble d'outils du chariot comprend au moins une pince de préhension des anodes, ou plus précisément au moins une pince de préhension des blocs anodiques.

Dans le domaine de la présente invention, c'est-à-dire l'exploitation d'un four dans une installation de cuisson d'anodes, la pince de préhension des anodes comprend généralement dans sa partie inférieure deux pattes pouvant serrer entre elles un bloc anodique ou un paquet de blocs anodiques adjacents.

Selon l'invention, ce chariot comporte un ensemble d'outils parmi lesquels au moins un premier et un deuxième outils d'un même premier type, agencés pour être introduits chacun dans une alvéole pour remplir une même première fonction, et possédant chacun un axe sensiblement vertical, les axes verticaux desdits premier et deuxième outils du premier type étant espacés, selon la direction transversale, d'une distance sensiblement égale à l'entraxe des alvéoles. De plus, les axes verticaux desdits premier et deuxième outils du premier type sont agencés sensiblement symétriquement par rapport au plan longitudinal médian du chariot, les axes verticaux desdits outils définissant entre eux un couloir central sensiblement longitudinal sur le chariot.

Généralement, le premier et le deuxième outils du même premier type sont agencés de manière fixe sur le chariot. De préférence, chaque outil de l'ensemble d'outils du chariot est agencé de manière fixe sur le chariot.

Ainsi, du fait de cette disposition sensiblement centrale et symétrique des outils doublés sur le chariot, la distance transversale entre le premier outil et le premier bord longitudinal du chariot, adjacent au premier outil, est sensiblement identique à la distance entre le deuxième outil et le deuxième bord longitudinal du chariot, opposé au premier bord longitudinal. Cet agencement permet d'éviter qu'il y ait un décalage transversal trop important entre l'un des outils et une alvéole extrême du bâtiment - selon la direction transversale - qui empêcherait l'accès de cet outil à cet alvéole, à moins d'augmenter la dimension transversale entre l'alvéole concernée et le mur du bâtiment de l'installation. L'invention permet donc, tout en gardant inchangées les dimensions du bâtiment de l'installation, de garantir l'accès de chacun de ces deux outils du même type à chacune des alvéoles, permettant ainsi d'assurer la redondance des outils et le gain de productivité recherchés.

En pratique, le couloir central possède la forme d'un parallélépipède ayant des faces latérales, verticales et longitudinales, parallèles au plan longitudinal médian du chariot et passant par les axes verticaux desdits outils. L'axe d'un outil s'entend comme l'axe de la partie utile de l'outil, c'est-à-dire la partie de l'outil qui est destinée à pénétrer dans l'alvéole.

Le chariot présente une zone centrale sensiblement longitudinale qui inclut le couloir central et qui est agencée sensiblement symétriquement par rapport au plan longitudinal médian du chariot, la dimension transversale de la zone centrale étant égale à N fois la dimension transversale du couloir central, N étant compris entre 1,4 et 2, de préférence entre 1,4 et 1,7, par exemple de l'ordre de 1,5. En pratique, cette zone centrale possède la forme d'un parallélépipède ayant des faces latérales, verticales et longitudinales, parallèles au plan longitudinal médian du chariot, et situées de part et d'autre des faces latérales du couloir central. Le chariot comprend plusieurs outils additionnels d'autres types, agencés pour être introduits chacun dans une alvéole pour remplir d'autres fonctions, et possédant chacun un axe sensiblement vertical, chacun de ces outils additionnels d'autres types étant disposés sur le chariot de sorte que son axe vertical soit situé dans la zone centrale, et de préférence dans le couloir central.

Ceci inclut la disposition où les outils ont leur axe compris dans le plan d'une face latérale de la zone centrale, ou du couloir central. De préférence, les outils montés sur le chariot et destinés à pénétrer dans une alvéole sont disposés intégralement dans la zone centrale ou dans le couloir central.

Cette disposition centrée des outils, par exemple de l'ensemble des outils du chariot destinés à pénétrer dans une alvéole, permet de créer sur le chariot un agencement rationalisé et compact. Ceci permet également de diminuer les longueurs des composants reliant les différents outils et leurs accessoires, ce qui contribue à l'optimisation de l'agencement et à l'amélioration de l'accès aux outils. Une meilleure visibilité peut également être obtenue pour l'opérateur.

Selon une réalisation possible, les outils additionnels comprennent au moins un premier et un deuxième outils d'un même deuxième type, différent du premier type, agencés pour être introduits chacun dans une alvéole pour remplir une même deuxième fonction, différente de la première fonction, les axes verticaux desdits premier et deuxième outils du deuxième type étant espacés, selon la direction transversale, d'une distance sensiblement égale à l'entraxe des alvéoles, lesdits premier et deuxième outils du deuxième type étant de plus agencés sensiblement symétriquement par rapport au plan longitudinal médian du chariot.

En d'autres termes, les axes verticaux des outils du deuxième type et les axes verticaux des outils du premier type sont alignés deux à deux longitudinalement, et les axes verticaux des outils du deuxième type sont compris dans le plan d'une face latérale du couloir central.

De façon concrète, les outils montés sur le chariot et destinés à être introduits dans une alvéole peuvent appartenir au groupe comprenant : une pince de préhension des anodes, un conduit de remplissage en poussier des alvéoles, un tuyau d'aspiration du poussier contenu dans une alvéole.

Selon une réalisation possible, le chariot comprend au moins deux pinces de préhension et/ou au moins deux conduits de remplissage.

Par exemple, le chariot comprend un unique tuyau d'aspiration du poussier contenu dans une alvéole, ledit tuyau d'aspiration possédant un axe sensiblement vertical qui est situé sensiblement dans le même plan vertical longitudinal que l'axe vertical de l'un des outils du premier type. En d'autres termes, l'axe vertical du tuyau d'aspiration du poussier est compris dans le plan d'une face latérale du couloir central.

Le chariot peut en outre comprendre un dispositif de levage comportant un crochet, ledit crochet étant disposé dans la zone centrale, et de préférence dans le couloir central.

Le chariot peut en outre comprendre une trémie de stockage de poussier possédant un axe sensiblement vertical, cet axe étant situé dans la zone centrale, et de préférence dans le couloir central. Du fait de sa très grande capacité, la trémie peut ne pas être contenue dans son intégralité dans la zone centrale ou le couloir central. Selon l'invention, cependant, la plus grande partie de la trémie est de préférence contenue dans la zone centrale ou le couloir central.

Selon une réalisation possible, le chariot comprend en outre un poste de pilotage agencé sur le chariot de façon sensiblement centrée par rapport au plan longitudinal médian du chariot, le poste de pilotage étant de préférence disposé sensiblement dans la zone centrale. Ceci contribue également à la compacité et au caractère rationnel de l'agencement du chariot, tout en améliorant la visibilité pour l'opérateur. En particulier, cela assure à l'opérateur une vue sur le fond de l'alvéole lors de l'utilisation d'un outil dans cette alvéole.

Par exemple, le poste de pilotage peut être disposé, selon la direction longitudinale, entre un ou des conduit(s) de remplissage en poussier des alvéoles et une ou des pince(s) de préhension des anodes.

Avantageusement, le poste de pilotage peut comprendre un siège pouvant pivoter autour d'un axe sensiblement vertical, le siège pouvant être ainsi orienté pour faire face à un plan vertical transversal, en direction de l'un des outils, au moins lors de la réalisation de l'opération correspondant à la fonction dudit outil.

En particulier, l'opérateur occupant le siège peut regarder en direction du ou des conduit de remplissage en poussier des alvéoles, pendant l'opération de remplissage des alvéoles, et ce contrairement à l'art antérieur où, lors de cette opération, le siège étant disposé de sorte à faire face à un plan vertical longitudinal, en direction de ce conduit, obligeant ainsi l'opérateur à lever le conduit et à s'avancer pour voir le fond de l'alvéole.

Selon une réalisation possible, le chariot comprend en outre des appareils qui sont destinés à permettre le fonctionnement desdits outils mais pas à être introduits dans une alvéole, ces appareils étant disposés sur le chariot hors du couloir central, et de préférence hors de la zone centrale. En effet, dans la mesure où ces appareils ne sont pas destinés à intervenir directement dans les alvéoles, il est prévu selon l'invention de les placer en dehors de la zone centrale ou du couloir central pour éviter qu'ils encombrent inutilement cette partie du chariot.

De préférence, lesdits appareils peuvent être disposés sur le chariot d'un même côté du couloir central, ou de la zone centrale. Grâce à cette disposition, il est possible de ménager de l'autre côté du couloir central, ou de la zone centrale, un couloir d'accès comportant le moins d'éléments possible, ce qui facilite notamment les opérations de maintenance.

Lesdits appareils appartiennent par exemple au groupe comprenant : une pompe, un dispositif de refroidissement, une trémie d'aspiration, un filtre.

La zone dans laquelle sont agencés ces appareils peut également contenir les conduites reliant ces appareils entre eux. Cette disposition permet de résoudre la difficulté liée à l'implantation de cet encombrant système d'aspiration.

Il peut être prévu que certains appareils - par exemple un local électrique - ne soient pas situés hors du couloir central, ou de la zone centrale du fait des contraintes de positionnement sur le chariot et de fonctionnement. Dans ce cas, de préférence, l'appareil concerné pourra être disposé à une extrémité longitudinale du chariot, afin de limiter son empiétement sur le couloir central, ou sur la zone centrale.

Ainsi, grâce à l'invention, il est possible de fournir un chariot dont la dimension transversale est réduite par rapport à l'art antérieur. Cette dimension transversale peut être inférieure à 8500 mm, de préférence inférieure à 8400 mm, et de préférence encore inférieure à 8300 mm. De plus, du fait de l'optimisation de l'agencement, et malgré la diminution de la dimension latérale, la dimension longitudinale du chariot peut être inchangée. Celle-ci peut par exemple être de l'ordre de 13 600 mm.

Selon un deuxième aspect, l'invention concerne une machine pour l'exploitation d'un four dans une installation de cuisson d'anodes pour l'électrolyse de l'aluminium, le four comprenant une pluralité de chambres s'étendant selon une direction transversale et disposées les unes à côté des autres selon une direction longitudinale, chaque chambre comportant une pluralité d'alvéoles s'étendant chacune sensiblement selon la direction longitudinale et disposées les unes à côté des autres selon la direction transversale. La machine comprend :

- un pont roulant qui comporte deux poutres s'étendant transversalement et qui est conçu pour se déplacer selon la direction longitudinale au-dessus des alvéoles ;

- un chariot tel que précédemment décrit, le chariot étant monté mobile transversalement sur les deux poutres du pont roulant.

Selon une réalisation possible, la distance longitudinale entre les deux poutres du pont roulant est définie par :

$$D = E + F + G + H + I + J + K + L + M$$

où, selon la direction longitudinale :

F est la demi dimension d'une pince de préhension des anodes montée sur le chariot ;

H est la dimension d'un poste de pilotage monté sur le chariot ;

J est la dimension d'un conduit de remplissage en poussier des alvéoles monté sur le chariot ;

L est la dimension d'un tuyau d'aspiration du poussier contenu dans une alvéole monté sur le chariot ;

E, G, I, K, M sont des jeux fonctionnels respectivement entre une poutre et la pince de préhension adjacente, la pince de préhension et le poste de pilotage, le poste de pilotage et le conduit de remplissage, le conduit de remplissage et le tuyau d'aspiration, le tuyau d'aspiration et la poutre adjacente.

Selon un troisième aspect, l'invention concerne une installation de cuisson d'anodes pour l'électrolyse de l'aluminium, comprenant :

- un bâtiment dans lequel est situé un four de cuisson d'anodes, le four comprenant une pluralité de chambres s'étendant selon une direction transversale et disposées les unes à côté des autres selon une direction longitudinale, chaque chambre comportant une pluralité d'alvéoles s'étendant chacune sensiblement selon la direction longitudinale et disposées les unes à côté des autres selon la direction transversale ;

- une machine tel que précédemment décrite, le pont roulant étant monté mobile longitudinalement sur des rails longitudinaux ménagés au voisinage de deux parois d'extrémité transversales du bâtiment.

Selon une réalisation possible, la dimension transversale du chariot est définie par : Ly = 2A-B+2C, où, selon la direction transversale :

A est la distance d'approche d'alvéole, c'est-à-dire la distance entre un rail longitudinal et le plan longitudinal médian de l'alvéole d'extrémité adjacente audit rail ;

B est la distance entre les axes verticaux desdits premier et deuxième outils du premier type, sensiblement égale à l'entraxe (d) des alvéoles ;

C est le dépassement autorisé, c'est-à-dire la distance entre un rail longitudinal et la paroi d'extrémité transversale du bâtiment correspondante.

On décrit à présent, à titre d'exemple non limitatif, un mode de réalisation possible de l'invention, en référence aux figures annexées :

La figure 1 est une vue en perspective d'une installation de cuisson d'anodes pour l'électrolyse de l'aluminium selon l'invention, l'installation comportant un four comprenant une pluralité d'alvéoles ;

La figure 2 est une vue similaire à la figure 1, montrant de plus une machine selon l'invention pour l'exploitation du four, la machine comprenant un pont roulant et un chariot ;

La figure 3 est une vue en perspective du chariot et des outils et appareils qu'il peut comporter ;

La figure 4 est une vue schématique de dessus du chariot ;

La figure 5 est une vue en perspective du chariot ;

La figure 6 est une vue latérale du chariot ;

La figure 7 représente, vue selon la direction longitudinale, le pont roulant avec le chariot dans ses deux positions latérales extrêmes ;

Les figures 8 et 9 sont des représentations partielles de l'installation, avec le chariot dans l'une de ses positions latérales extrêmes ;

Les figures 10 à 12 illustrent la machine, ainsi que la visibilité de l'opérateur, respectivement lors de la préhension d'un paquet d'anodes, lors du remplissage d'une alvéole en poussier, et lors de l'aspiration du poussier.

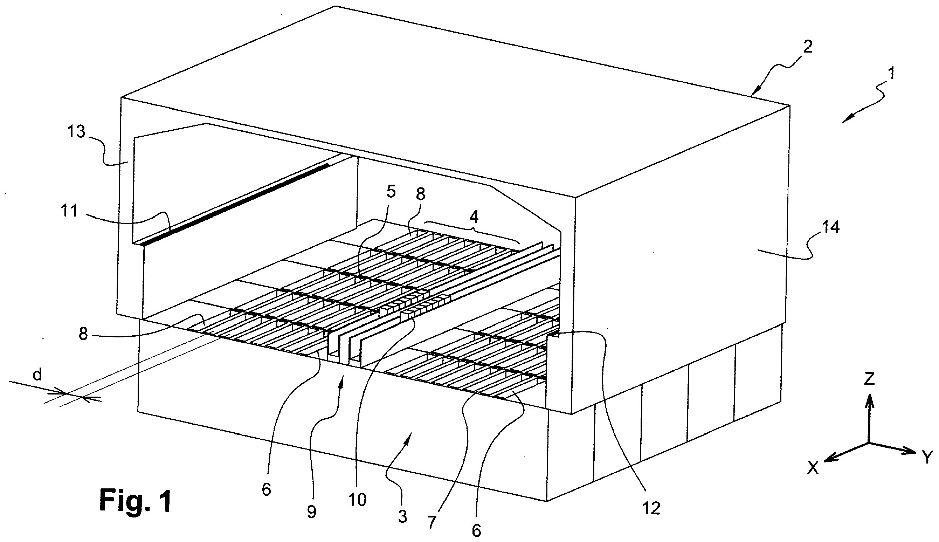

La figure 1 représente une installation 1 de cuisson d'anodes pour l'électrolyse de l'aluminium. L'installation 1 comprend un bâtiment 2 dans lequel est situé un four 3 de cuisson d'anodes.

Le four 3 - dit four à feu tournant - comprend plusieurs chambres 4 s'étendant selon une direction transversale Y et disposées les unes à côté des autres selon une direction longitudinale X. Deux chambres 4 adjacentes - selon la direction X - sont séparées par une paroi transversale 5. En outre, les chambres 4 sont limitées à leurs extrémités transversales par des parois longitudinales 6.

On définit l'axe Z comme la verticale ascendante, les axes X, Y, Z formant un repère orthogonal direct.

Chaque chambre 4 comprend une succession de cloisons chauffantes 7 orientées longitudinalement, à l'intérieur desquelles circulent de l'air et des gaz de combustion fournis par des brûleurs (non représentés). Les brûleurs sont montés au-dessus du four 3 sur un système mobile qui est déplacé progressivement par rapport aux chambres 4 pendant le cycle de cuisson.

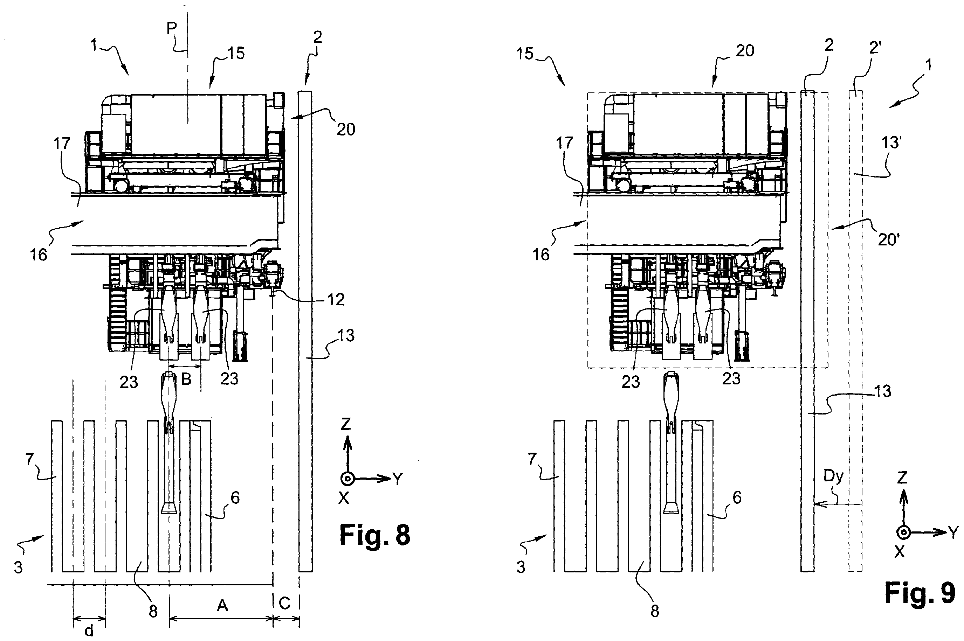

Entre deux cloisons chauffantes 7 est définie une alvéole 8. Ainsi, chaque chambre 4 comporte une pluralité d'alvéoles 8 s'étendant chacune sensiblement selon la direction longitudinale X et disposées les unes à côté des autres selon la direction transversale Y. L'entraxe d des alvéoles 8 - défini comme la distance transversale entre les plans longitudinaux médians de deux alvéoles adjacentes, comme illustré sur la figure 8 - est sensiblement constant. Ainsi, la disposition des alvéoles 8 selon la direction transversale est sensiblement régulière. A titre d'exemple, d peut être de l'ordre de 1,5 m environ.

Comme illustré sur la figure 1, l'installation 1 comprend de plus un convoyeur 9 d'anodes qui est ici agencé de façon centrée dans le bâtiment 2, et qui s'étend sensiblement longitudinalement entre deux rangées de chambres 4. Ce convoyeur 9 reçoit des anodes 10 crues en matériau carboné, destinées à être cuites dans le four 3.

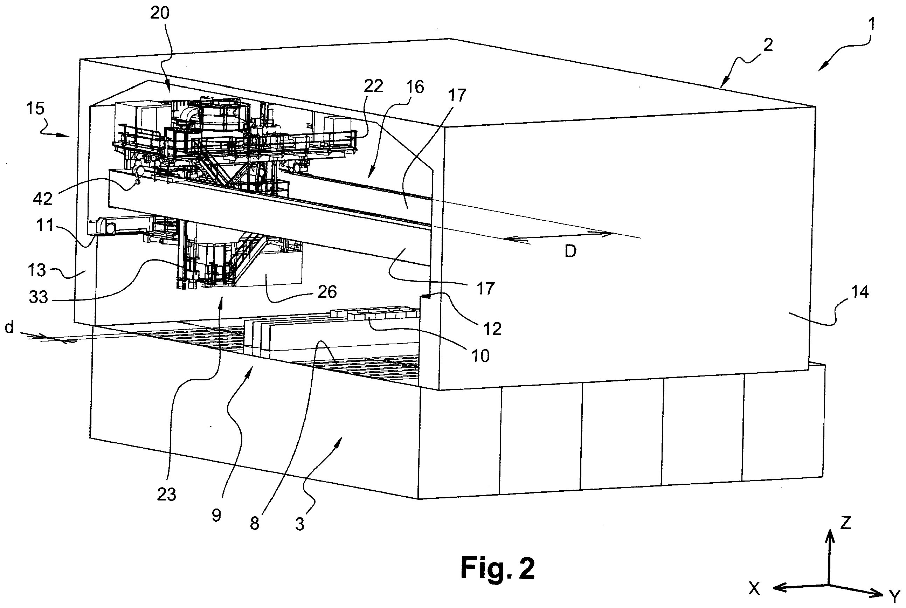

L'installation 1 comprend de plus une machine 15 pour l'exploitation du four 3, comme illustré sur la figure 2.

La machine 15 comprend un pont roulant 16 comportant deux poutres 17 qui s'étendent transversalement et qui sont espacées - selon l'axe X - d'une distance longitudinale D. Le pont roulant 16 est conçu pour se déplacer selon la direction longitudinale X au-dessus des alvéoles 8. A cet effet, les poutres 17 du pont roulant 16 sont montées mobiles longitudinalement sur des rails longitudinaux 11, 12 ménagés chacun au voisinage d'une des deux parois 13, 14 d'extrémité transversales du bâtiment 2.

La machine 15 comprend en outre un chariot 20 qui est monté mobile transversalement sur les deux poutres 17 du pont roulant 16. Le chariot 20 est ainsi conçu pour se déplacer selon la direction transversale Y au-dessus des alvéoles 8.

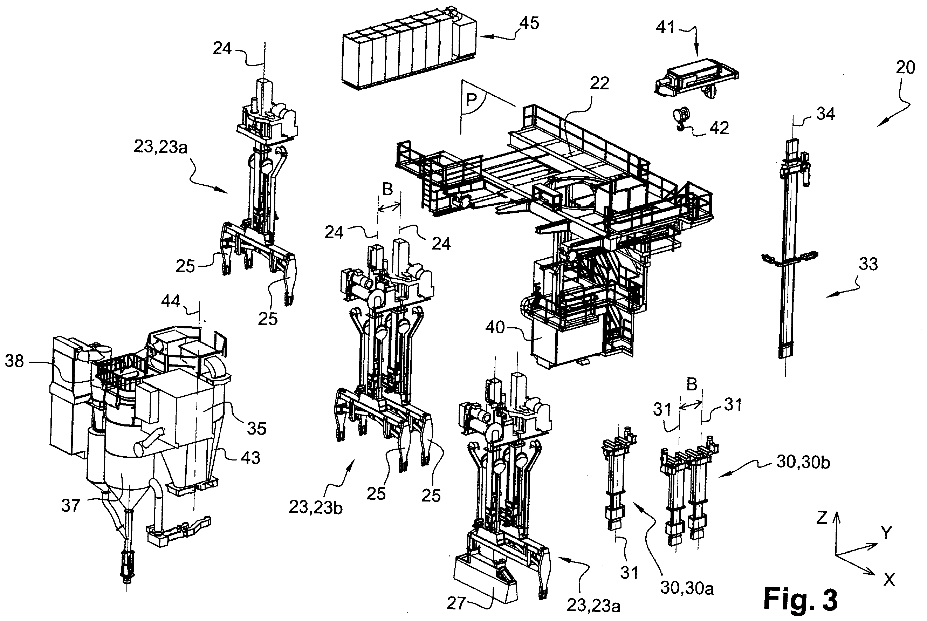

Comme illustré sur la figure 3, le chariot 20 comprend une ossature 21 comportant une plateforme 22 sensiblement horizontale sur laquelle peut se déplacer un opérateur, et qui est ici sensiblement rectangulaire. L'ossature 21 forme le support des systèmes permettant de faire fonctionner le four 3, à savoir notamment :

- des outils destinés à être introduits dans les alvéoles 8 ;

- des appareils qui ne sont pas destinés à être introduits dans les alvéoles 8 mais servent au fonctionnement de la machine 15 ;

- un poste de pilotage 40 d'où l'opérateur peut commander les différents outils ou appareils, ce poste étant situé sous la plateforme 22 ;

- ainsi qu'un ensemble de conduites, passerelles, échelles, etc.

Les outils qui sont montés sur le chariot 20 et qui sont destinés à être introduits dans une alvéole 8 comprennent :

- une pince 23 de préhension des anodes 10. Une pince 23 présente un axe sensiblement vertical 24. Elle comprend à sa partie inférieure deux pattes 25 situées chacune sensiblement dans un plan (Y, Z) et pouvant serrer entre elles un paquet 26 d'anodes 10 comportant plusieurs anodes 10 adjacentes selon la direction longitudinale X (voir figure 2). Un paquet 26 peut par exemple contenir entre cinq et neuf anodes 10. La pince 23 peut ainsi permettre de placer des anodes 10 crues dans une alvéole 8 et d'enlever des anodes 10 cuites d'une alvéole 8. La pince 23 peut être une pince simple 23a. Il peut également s'agir d'une pince double 23b, qui comporte deux pinces simples adjacentes et décalées, selon la direction transversale Y, d'une distance B sensiblement égale à l'entraxe d des alvéoles 8, de sorte que la pince double 23b puisse intervenir simultanément dans deux alvéoles 8 adjacentes. La pince 23 peut également être une pince simple 23a ou une pince double 23b munie d'un outil auxiliaire 27 ;

- un conduit de remplissage 30 en poussier des alvéoles 8. Un conduit de remplissage 30 présente un axe sensiblement vertical 31. Il peut s'agir d'un conduit de remplissage simple 30a ou d'un conduit de remplissage double 30b, qui comporte deux conduits de remplissage simples adjacents et décalés, selon la direction transversale Y, d'une distance B sensiblement égale à l'entraxe d des alvéoles 8, de sorte que le conduit de remplissage double 30b puisse intervenir simultanément dans deux alvéoles 8 adjacentes ;

- un tuyau d'aspiration 33 du poussier contenu dans une alvéole 8. Un tuyau d'aspiration 33 présente un axe sensiblement vertical 34.

Parmi les appareils qui ne sont pas destinés à être introduits dans les alvéoles 8, on trouve une pompe d'aspiration 35, un dispositif de refroidissement 36, une trémie d'aspiration 37 et un filtre 38, par exemple de type cyclone.
Le chariot 20 comporte en outre un dispositif de levage 41 comportant un crochet 42, par exemple un palan de forte capacité, destiné notamment à la manutention des cloisons chauffantes 7, ainsi qu'une trémie 43 de stockage de poussier possédant un axe sensiblement vertical 44. Le chariot 20 comporte également un local électrique 45 ou une armoire électrique.
Le chariot 20 possède un plan longitudinal médian P, qui s'étend parallèlement aux axes X et Z, comme représenté sur les figures 3 à 5, notamment. Le chariot 20 possède une dimension longitudinale Lx et une dimension transversale Ly qui, si la plateforme 22 est rectangulaire, peuvent typiquement correspondre respectivement à la longueur et à la largeur de la plateforme 22.
Selon l'invention, afin d'optimiser l'agencement du chariot 20, il est prévu de placer certains des outils destinés à être introduits dans les alvéoles 8, et de préférence tous les outils destinés à être introduits dans les alvéoles 8, de façon centrée par rapport au plan longitudinal médian P. En outre, les outils ou appareils qui ne sont pas destinés à être introduits dans les alvéoles 8 n'ont pas besoin d'être centrés et peuvent donc être disposés à un autre endroit du chariot 20, de façon à ne pas encombrer inutilement le voisinage du plan longitudinal médian P.
Plus précisément, il est défini sur le chariot 20 un couloir central 50 qui possède la forme d'un parallélépipède ayant des faces latérales 46, 47 verticales et longitudinales, parallèles au plan longitudinal médian P, qui est centré sur le plan P, et qui possède une dimension transversale sensiblement égale à l'entraxe d des alvéoles 8.
En outre, il est défini sur le chariot 20 une zone centrale 51 sensiblement longitudinale qui inclut le couloir central 50 et qui est agencée sensiblement symétriquement par rapport au plan longitudinal médian P du chariot 20. La dimension transversale de la zone centrale est égale à N fois la dimension transversale du couloir central 50, N étant compris entre 1,4 et 2, de préférence entre 1,4 et 1,7, par exemple de l'ordre de 1,5. Ainsi, la zone centrale 51 possède la forme d'un parallélépipède ayant des faces latérales 48, 49 verticales et longitudinales, parallèles au plan longitudinal médian P, et situées de part et d'autre des faces latérales 46, 47 du couloir central 50.
Selon l'invention, certains des outils, et de préférence tous les outils, destinés à être introduits dans les alvéoles 8, ont leur axe vertical inclus dans la zone centrale 51, et de préférence dans le couloir central 50. Selon une réalisation particulièrement avantageuse, certains des outils, et de préférence tous les outils, destinés à être introduits dans les alvéoles 8 sont inclus dans la zone centrale 51.

Dans la réalisation représentée, le chariot 20 comprend une première et une deuxième pinces 23, c'est-à-dire une pince double, ainsi qu'un premier et un deuxième conduits de remplissage 30 en poussier, c'est-à-dire un conduit de remplissage double.

Les axes verticaux 24 des pinces 23 sont agencés sensiblement symétriquement par rapport au plan longitudinal médian P du chariot 20. En d'autres termes, puisque les axes verticaux 24 sont espacés, selon la direction transversale Y, d'une distance B sensiblement égale à l'entraxe d des alvéoles 8 et que le couloir central 50 a une largeur d, les axes verticaux 24 des pinces 23 sont compris chacun dans une face latérale 46, 47 du couloir central 50.

De façon similaire, les axes verticaux 31 des conduits de remplissage 30 en poussier sont agencés sensiblement symétriquement par rapport au plan longitudinal médian P du chariot 20. En d'autres termes, puisque les axes verticaux 31 sont espacés, selon la direction transversale Y, d'une distance B sensiblement égale à l'entraxe d des alvéoles 8 et que le couloir central 44 a une largeur d, les axes verticaux 31 des conduits de remplissage 30 en poussier sont compris chacun dans une face latérale 46, 47 du couloir central 50.

Les axes 24, 31 des pinces 23 et des conduits de remplissage 30 en poussier, respectivement, sont donc deux à deux situés dans un même plan (X, Z).

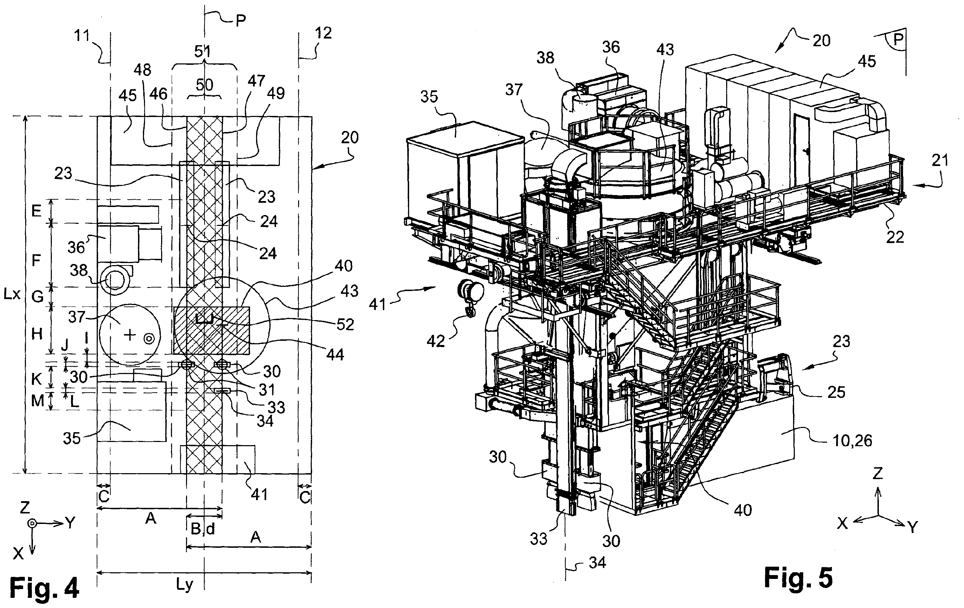

Dans la réalisation représentée, le chariot 20 comprend un unique tuyau d'aspiration 33 du poussier contenu dans une alvéole 8. Avantageusement, l'axe vertical 34 du tuyau d'aspiration 33 est situé dans la zone centrale 51, et de préférence dans le couloir central 50. De préférence, le tuyau d'aspiration 33 est situé dans son intégralité dans la zone centrale 51. Comme on le voit sur la figure 4, l'axe vertical 34 du tuyau d'aspiration 33 peut être situé sensiblement dans un même plan (X, Z) qu'un axe vertical 24 d'une pince - ou un axe vertical 31 d'un conduit de remplissage 30.

Par ailleurs, le crochet 42 du dispositif de levage 41 peut également être disposé dans la zone centrale 51, et de préférence dans le couloir central 50. Dans la réalisation représentée, le dispositif de levage 41 est agencé à une extrémité longitudinale du chariot 20. Par ailleurs, on peut prévoir de disposer le local électrique 45 ou l'armoire électrique à l'autre extrémité longitudinale du chariot 20, éventuellement de façon sensiblement centrée transversalement.

La trémie 43 de stockage de poussier est également avantageusement disposée de façon sensiblement centrée. Plus précisément, l'axe vertical 44 de la trémie 43 peut être situé dans la zone centrale 51, et de préférence dans le couloir central 50, par exemple dans une face latérale 46, 47 du couloir central 50.

Avantageusement, on peut prévoir une disposition sensiblement centrée du poste de pilotage 40 par rapport au plan longitudinal médian P du chariot 20. Le poste de pilotage 40 est de préférence disposé sensiblement dans la zone centrale 51. Il comprend un siège 52, pour l'opérateur, qui peut pivoter autour d'un axe sensiblement vertical. Ainsi, le siège 52 peut être orienté pour faire face à un plan vertical transversal, en direction des pinces 23, au moins lors des opérations de préhension des anodes 10, crues ou cuites.

Afin d'optimiser l'agencement du chariot 20 et de libérer au maximum la zone centrale 51 et le couloir central 50, les appareils portés par le chariot 20 qui ne sont pas destinés à être introduits dans une alvéole 8 sont avantageusement disposés sur le chariot 20 hors du couloir central 50, et de préférence hors de la zone centrale 51. De préférence, ces appareils peuvent être disposés sur le chariot 20 d'un même côté du couloir central 50, ou de la zone centrale 51. Ainsi, dans la réalisation représentée, la pompe d'aspiration 35, le dispositif de refroidissement 36, la trémie d'aspiration 37 et le filtre 38 sont disposés sur le chariot 20 d'un même côté du couloir central 50.

Dans la zone centrale 51 ou le couloir central 50, et selon la direction longitudinale X, les différents outils ou éléments du chariot 20 peuvent être disposés selon l'ordre suivant : les pinces 23, le poste de pilotage 40, les conduits de remplissage 30 en poussier, et le tuyau d'aspiration 33 du poussier. Le poste de pilotage 40 étant situé entre les pinces 23 et les conduits de remplissage 30, et étant équipé d'un siège pivotant, il permet à l'opérateur une excellente visibilité sur les opérations menées dans les alvéoles 8 lors de la préhension des anodes 10 et lors du remplissage des alvéoles 8 en poussier, qui sont des opérations délicates et devant être menées avec précision.

On pourrait prévoir des dispositions différentes, et notamment des conduits de remplissage 30 en poussier agencés, selon la direction longitudinale X, entre les pinces 23 et la trémie 43.

Du fait de l'agencement amélioré du chariot 20, l'invention permet de réduire au moins l'une des dimensions du chariot 20.

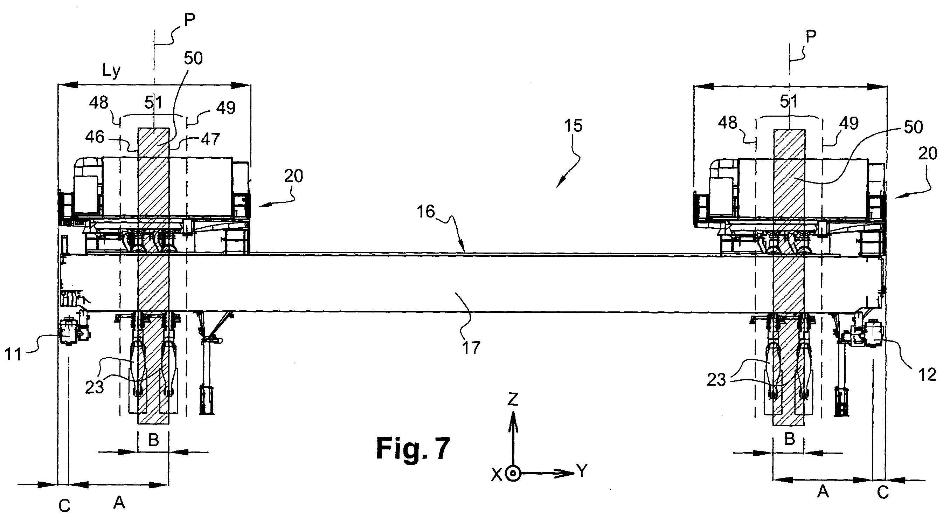

Dans la réalisation représentée, comme illustré schématiquement sur les figures 4 et 7, la dimension transversale du chariot est définie par :

Ly = 2A - B + 2C, où, selon la direction transversale Y :

- A est la distance d'approche d'alvéole, c'est-à-dire la distance entre un rail longitudinal 11, 12 et le plan longitudinal médian de l'alvéole d'extrémité adjacente audit rail (voir également la figure 8) ;

- B est la distance entre les axes verticaux des outils doublés d'un même type, c'est-à-dire ici entre les axes 24 des pinces 23 ou entre les axes 31 des conduits de remplissage 30, B étant sensiblement égale à l'entraxe d

EP 3 084 331 B1

des alvéoles 8 ;

- C est le dépassement autorisé, c'est-à-dire la distance entre un rail longitudinal 11, 12 et la paroi d'extrémité transversale 13, 14 correspondante du bâtiment 2.

En pratique, on peut avoir :

$$Ly = 2 \times 4300 - 1325 + 2 \times 500 = 8275 \text{ mm,}$$

tandis que les chariots connus peuvent avoir une dimension transversale de l'ordre de 8550 mm.

Par ailleurs, en optimisant l'agencement, la dimension longitudinale Lx du chariot 20 peut être inchangée, et par exemple de l'ordre de 13 600 mm.

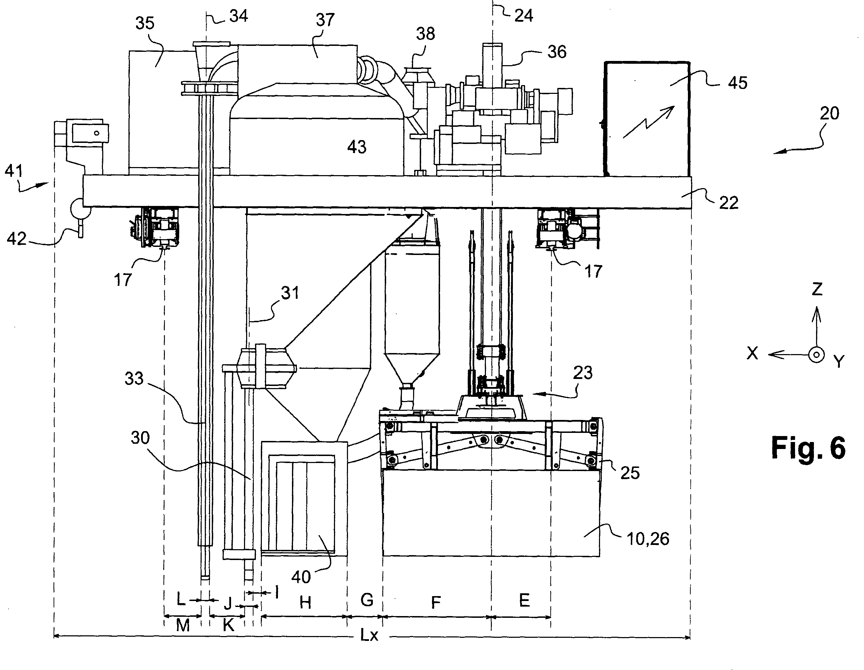

Dans la direction longitudinale X, on cherche également à réduire la distance D entre les deux poutres 17 du pont roulant 16, pour réduire l'encombrement mais également la masse de l'installation 1. Comme représenté sur les figures 4 et 6, la distance longitudinale D entre les deux poutres 17 du pont roulant 16 est définie par :

$$D = E + F + G + H + I + J + K + L + M$$

où, selon la direction longitudinale :

- F est la demi dimension d'une pince 23 de préhension des anodes 10 ;

- H est la dimension du poste de pilotage 40 ;

- J est la dimension d'un conduit de remplissage 30 en poussier des alvéoles 8 ;

- L est la dimension du tuyau d'aspiration 33 du poussier contenu dans une alvéole 8 ;

- E, G, I, K, M sont des jeux fonctionnels respectivement entre une poutre 17 et la pince 23 de préhension adjacente, la pince 23 de préhension et le poste de pilotage 40, le poste de pilotage 40 et le conduit de remplissage 30, le conduit de remplissage 30 et le tuyau d'aspiration 33, le tuyau d'aspiration 33 et la poutre adjacente 17.

En pratique, on peut avoir :

$$D = 600 + 2500 + 500 + 1800 + 500 + 250 + 1000 + 250 + 600 = 8000 \text{ mm.}$$

Comme illustré sur les figures 8 et 9, un premier avantage de l'agencement du chariot 20 selon l'invention réside dans l'optimisation du fonctionnement du four 3 sans impact négatif sur les dimensions de l'installation 1.

Plus précisément, les figures 8 et 9 représentent le chariot 20 dans une position extrême, près d'une paroi 13 d'extrémité transversale du bâtiment 2.

Avec des dimensions inchangées du bâtiment 2, mais une optimisation de l'agencement du chariot 20 selon l'invention, et en particulier une disposition centrée des outils, chacun des outils doublés peut avoir accès à l'ensemble des alvéoles 8 du four 3, comme illustré sur la figure 8.

En variante et/ou en complément, il peut être possible, du fait de la réduction de l'encombrement latéral du chariot 20, de réduire les dimensions du bâtiment 2. La figure 9 représente le chariot 20 en position extrême près d'une paroi d'extrémité 13 d'un bâtiment 2 selon l'invention. Sur cette même figure sont également représentés, de façon schématique et en traits pointillés : un chariot 20' de l'art antérieur, ayant une dimension transversale plus importante que le chariot 20 selon l'invention, et la paroi d'extrémité 13' du bâtiment 2' de l'art antérieur recevant ce chariot 20'. A titre d'exemple, comme illustré sur la figure 9, il est possible de diminuer la dimension transversale du bâtiment 2 d'une valeur Dy de l'ordre de 700 mm.

Un deuxième avantage de l'invention est de permettre, en rationalisant l'agencement des différents outils et appareils sur le chariot 20, d'assurer à l'opérateur présent dans le poste de pilotage 40 une meilleure visibilité lors des différentes opérations qu'il conduit.

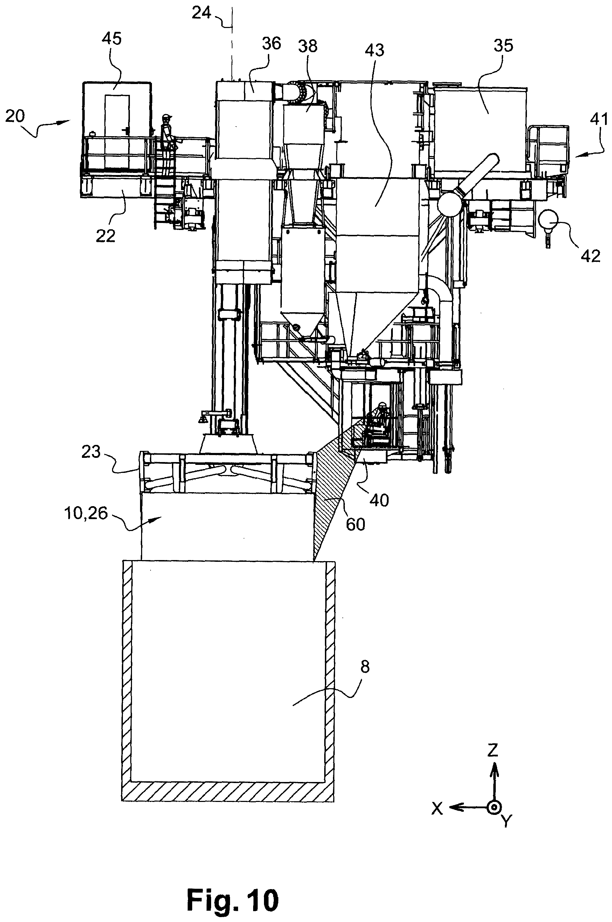

Les figures 10 à 12 illustrent ainsi le champ de vision 60 possible de l'opérateur en direction de l'alvéole 8 dans

9

laquelle il travaille, au cours des opérations suivantes :

- préhension d'un paquet 26 d'anodes 10 par une pince 23 ou l'une des pinces 23, les anodes 10 étant crues ou cuites (figure 10) ;

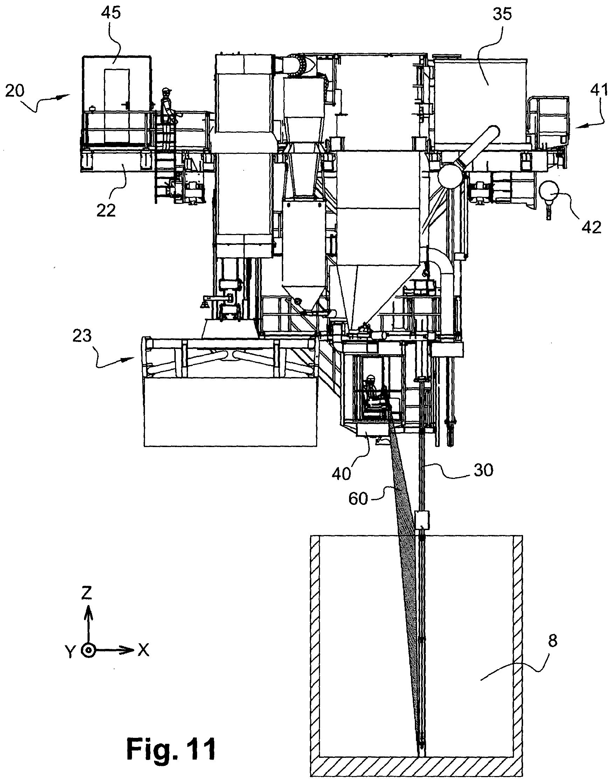

- remplissage d'une alvéole 8 en poussier, au moyen du ou des conduits de remplissage 30 (figure 11) ;

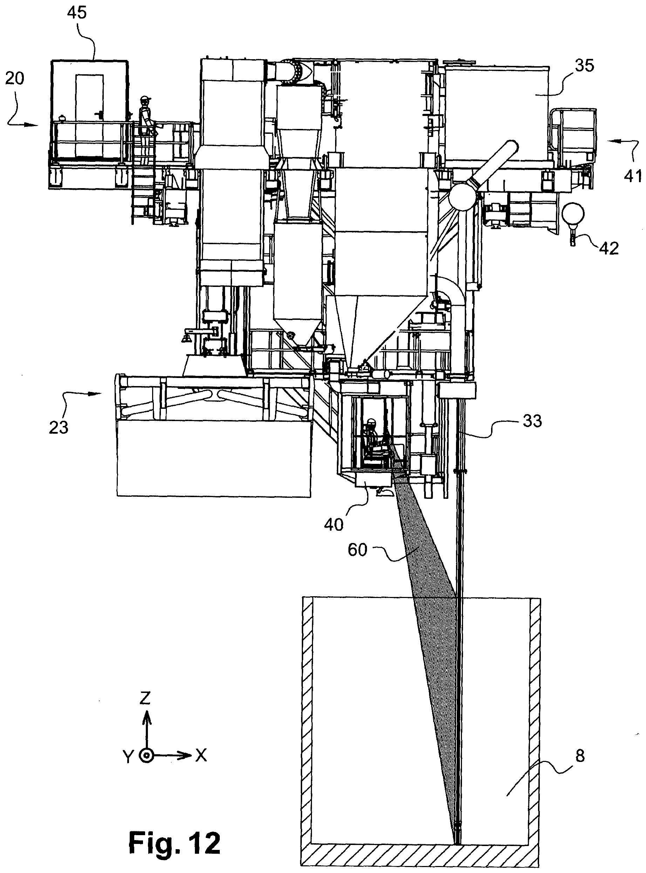

- aspiration du poussier depuis une alvéole 8, une fois les anodes 10 cuites, au moyen du tuyau d'aspiration 33 (figure 12).

Les figures 11 et 12 montrent clairement que, grâce à l'invention, l'opérateur a une visibilité jusqu'au fond de l'alvéole 8 concernée, sans avoir besoin de quitter son siège, et en particulier de se lever.

Ainsi, l'invention apporte une amélioration déterminante à la technique antérieure, en fournissant un chariot qui porte certains outils en double, pour des raisons de redondance et de cadence, qui garantit l'accès de chacun des ces outils à l'ensemble des alvéoles du four, et sans dégrader la visibilité de l'opérateur vers les alvéoles ni augmenter l'encombrement du chariot. De par la disposition optimisée des différents outils et appareils sur le chariot, l'invention permet de plus d'améliorer considérablement l'agencement du chariot sans nécessiter la mise en ouvre de nombreuses conduites supplémentaires reliant entre eux ces outils et appareils, ce qui compliquerait et alourdirait la structure du chariot, et nécessiterait davantage de maintenance.

Il va de soi que l'invention n'est pas limitée au mode de réalisation décrit ci-dessus à titre d'exemple mais qu'elle comprend tous les équivalents techniques et les variantes des moyens décrits ainsi que leurs combinaisons.

**Revendications**

1. Chariot pour l'exploitation d'un four (3) dans une installation (1) de cuisson d'anodes (10) pour l'électrolyse de l'aluminium, le four (3) comprenant une pluralité d'alvéoles (8) s'étendant chacune sensiblement selon une direction longitudinale (X) et disposées les unes à côté des autres selon une direction transversale (Y), l'entraxe (d) des alvéoles (8) - défini comme la distance transversale entre les plans longitudinaux médians de deux alvéoles (8) adjacentes - étant sensiblement constant, le chariot (20) étant conçu pour se déplacer selon la direction transversale (Y) au-dessus des alvéoles (8) et possédant un plan longitudinal médian (P), le chariot (20) comportant au moins un premier et un deuxième outils (23, 30) d'un même premier type, agencés pour être introduits chacun dans une alvéole (8) pour remplir une même première fonction, et possédant chacun un axe (24, 31) sensiblement vertical, les axes verticaux (24, 31) desdits premier et deuxième outils (23, 30) du premier type étant espacés, selon la direction transversale (Y), d'une distance (B) sensiblement égale à l'entraxe (d) des alvéoles (8), **caractérisé en ce que** les axes verticaux (24, 31) desdits premier et deuxième outils (23, 30) du premier type sont agencés sensiblement symétriquement par rapport au plan longitudinal médian (P) du chariot (20), les axes verticaux (24, 31) desdits outils (23, 30) définissant entre eux un couloir central (50) sensiblement longitudinal sur le chariot (20), **en ce que** le chariot présente une zone centrale (51) sensiblement longitudinale qui inclut le couloir central (50) et qui est agencée sensiblement symétriquement par rapport au plan longitudinal médian (P) du chariot (20), la dimension transversale de la zone centrale étant égale à N fois la dimension transversale du couloir central (50), N étant compris entre 1,4 et 2, de préférence entre 1,4 et 1,7, par exemple de l'ordre de 1,5, et **en ce que** le chariot comprend plusieurs outils additionnels (23, 30, 33) d'autres types, agencés pour être introduits chacun dans une alvéole (8) pour remplir d'autres fonctions, et possédant chacun un axe sensiblement vertical (24, 31, 34), chacun de ces outils additionnels d'autres types étant disposés sur le chariot (20) de sorte que son axe vertical soit situé dans la zone centrale (51), et de préférence dans le couloir central (50).

2. Chariot selon la revendication 1, **caractérisé en ce que** les outils additionnels comprennent au moins un premier et un deuxième outils (23, 30) d'un même deuxième type, différent du premier type, agencés pour être introduits chacun dans une alvéole (8) pour remplir une même deuxième fonction, différente de la première fonction, les axes verticaux (24, 31) desdits premier et deuxième outils (23, 30) du deuxième type étant espacés, selon la direction transversale (Y), d'une distance (B) sensiblement égale à l'entraxe (d) des alvéoles (8), lesdits premier et deuxième outils (23, 30) du deuxième type étant de plus agencés sensiblement symétriquement par rapport au plan longitudinal médian (P) du chariot (20).

3. Chariot selon la revendication 1 ou la revendication 2, **caractérisé en ce que** les outils montés sur le chariot (20) et destinés à être introduits dans une alvéole (8) appartiennent au groupe comprenant : une pince (23) de préhension des anodes (10), un conduit de remplissage (30) en poussier des alvéoles (8), un tuyau d'aspiration (33) du poussier contenu dans une alvéole (8).

**4.** Chariot selon la revendication 3, **caractérisé en ce qu'**il comprend au moins deux pinces (23) de préhension et/ou au moins deux conduits (30) de remplissage.

**5.** Chariot selon l'une des revendications 1 à 4, **caractérisé en ce qu'**il comprend un unique tuyau d'aspiration (33) du poussier contenu dans une alvéole (8), ledit tuyau d'aspiration (33) possédant un axe (34) sensiblement vertical qui est situé sensiblement dans le même plan vertical longitudinal que l'axe vertical (24, 31) de l'un des outils (23, 30) du premier type.

**6.** Chariot selon l'une des revendications 1 à 5, **caractérisé en ce qu'**il comprend en outre un dispositif de levage (41) comportant un crochet (42), ledit crochet (42) étant disposé dans la zone centrale (51), et de préférence dans le couloir central (50).

**7.** Chariot selon l'une des revendications 1 à 6, **caractérisé en ce qu'**il comprend en outre une trémie (43) de stockage de poussier possédant un axe (44) sensiblement vertical, cet axe (44) étant situé dans la zone centrale (51), et de préférence dans le couloir central (50).

**8.** Chariot selon l'une des revendications 1 à 7, **caractérisé en ce qu'**il comprend en outre un poste de pilotage (40) agencé sur le chariot (20) de façon sensiblement centrée par rapport au plan longitudinal médian (P) du chariot (20), le poste de pilotage (40) étant de préférence disposé sensiblement dans la zone centrale (51).

**9.** Chariot selon la revendication 8, **caractérisé en ce que** le poste de pilotage (40) est disposé, selon la direction longitudinale (X), entre un ou des conduit(s) de remplissage (30) en poussier des alvéoles (8) et une ou des pince(s) (23) de préhension des anodes (10).

**10.** Chariot selon la revendication 8 ou 9, **caractérisé en ce que** le poste de pilotage (40) comprend un siège (52) pouvant pivoter autour d'un axe sensiblement vertical, le siège (52) pouvant être ainsi orienté pour faire face à un plan vertical transversal, en direction de l'un des outils (23), au moins lors de la réalisation de l'opération correspondant à la fonction dudit outil (23).

**11.** Chariot selon l'une des revendications 1 à 10, **caractérisé en ce qu'**il comprend en outre des appareils (35-38) qui sont destinés à permettre le fonctionnement desdits outils (23, 30) mais pas à être introduits dans une alvéole (8), ces appareils (35-38) étant disposés sur le chariot (20) hors du couloir central (50), et de préférence hors de la zone centrale (51).

**12.** Chariot selon la revendication 11, **caractérisé en ce que** lesdits appareils (35-38) sont disposés sur le chariot (20) d'un même côté du couloir central (50), ou de la zone centrale (51).

**13.** Chariot selon la revendication 11 ou 12, **caractérisé en ce que** lesdits appareils appartiennent au groupe comprenant : une pompe (35), un dispositif de refroidissement (36), une trémie d'aspiration (37), un filtre (38).

**14.** Machine pour l'exploitation d'un four (3) dans une installation (1) de cuisson d'anodes (10) pour l'électrolyse de l'aluminium, le four (3) comprenant une pluralité de chambres (4) s'étendant selon une direction transversale (Y) et disposées les unes à côté des autres selon une direction longitudinale (X), chaque chambre (4) comportant une pluralité d'alvéoles (8) s'étendant chacune sensiblement selon la direction longitudinale (X) et disposées les unes à côté des autres selon la direction transversale (Y), la machine (15) comprenant :

- un pont roulant (16) qui comporte deux poutres (17) s'étendant transversalement et qui est conçu pour se déplacer selon la direction longitudinale au-dessus des alvéoles (8) ;
- un chariot (20) selon l'une des revendications 1 à 13, le chariot (20) étant monté mobile transversalement sur les deux poutres (17) du pont roulant (16).

**15.** Machine selon la revendication 14, **caractérisée en ce que** la distance longitudinale entre les deux poutres (17) du pont roulant (16) est définie par :

$$D = E + F + G + H + I + J + K + L + M$$

où, selon la direction longitudinale (X) :

F est la demi-dimension d'une pince (23) de préhension des anodes (10) montée sur le chariot (20) ;
H est la dimension d'un poste de pilotage (40) monté sur le chariot (20) ;
J est la dimension d'un conduit de remplissage (30) en poussier des alvéoles (8) monté sur le chariot (20) ;
L est la dimension d'un tuyau d'aspiration (33) du poussier contenu dans une alvéole (8) monté sur le chariot (20) ;
E, G, I, K, M sont des jeux fonctionnels respectivement entre une poutre (17) et la pince de préhension (23) adjacente, la pince de préhension (23) et le poste de pilotage (40), le poste de pilotage (40) et le conduit de remplissage (30), le conduit de remplissage (30) et le tuyau d'aspiration (33), le tuyau d'aspiration (33) et la poutre (17) adjacente.

16. Installation de cuisson d'anodes (10) pour l'électrolyse de l'aluminium, comprenant :

- un bâtiment (2) dans lequel est situé un four (3) de cuisson d'anodes, le four (3) comprenant une pluralité de chambres (4) s'étendant selon une direction transversale (Y) et disposées les unes à côté des autres selon une direction longitudinale (X), chaque chambre (4) comportant une pluralité d'alvéoles (8) s'étendant chacune sensiblement selon la direction longitudinale (X) et disposées les unes à côté des autres selon la direction transversale (Y) ;
- une machine (15) selon la revendication 14 ou 15, le pont roulant (16) étant monté mobile longitudinalement sur des rails (11, 12) longitudinaux ménagés au voisinage de deux parois d'extrémité (13, 14) transversales du bâtiment (2).

17. Installation selon la revendication 16, **caractérisée en ce que** la dimension transversale du chariot (20) est définie par : Ly = 2A - B + 2C,
où, selon la direction transversale :

A est la distance d'approche d'alvéole, c'est-à-dire la distance entre un rail (11, 12) longitudinal et le plan longitudinal médian de l'alvéole (8) d'extrémité adjacente audit rail (11, 12) ;
B est la distance entre les axes verticaux (24, 31) desdits premier et deuxième outils (23, 30) du premier type, sensiblement égale à l'entraxe (d) des alvéoles (8) ;
C est le dépassement autorisé, c'est-à-dire la distance entre un rail (11, 12) longitudinal et la paroi d'extrémité (13, 14) transversale du bâtiment (2) correspondante.

## Patentansprüche

1. Wagen zum Betrieb eines Ofens (3) in einer Anlage (1) zur Befeuerung bzw. zum Brennen von Anoden (10) für die Aluminiumelektrolyse, wobei der Ofen (3) eine Mehrzahl von Zellen (8) umfasst, die sich jeweils im Wesentlichen in einer Längsrichtung (X) erstrecken und in einer Querrichtung (Y) nebeneinander angeordnet sind, wobei der Achsabstand (d) der Zellen (8) - der als der Querabstand zwischen den Mittellängsebenen zweier benachbarter Zellen (8) definiert ist - im Wesentlichen konstant ist, wobei der Wagen (20) dazu ausgelegt ist, sich in der Querrichtung (Y) über die Zellen (8) zu bewegen, und eine Mittellängsebene (P) aufweist, wobei der Wagen (20) zumindest ein erstes und ein zweites Werkzeug (23, 30) eines selben ersten Typs aufweist, die dazu angeordnet sind, jeweils in eine Zelle (8) eingeführt zu werden, um eine selbe erste Funktion zu erfüllen, und jeweils eine im Wesentlichen vertikale Achse (24, 31) aufweisen, wobei die vertikalen Achsen (24, 31) des ersten und zweiten Werkzeugs (23, 30) des ersten Typs in der Querrichtung (Y) um einen Abstand (B), der im Wesentlichen gleich dem Achsabstand (d) der Zellen (8) ist, beabstandet sind, **dadurch gekennzeichnet, dass** die vertikalen Achsen (24, 31) des ersten und zweiten Werkzeugs (23, 30) des ersten Typs im Wesentlichen symmetrisch zur Mittellängsebene (P) des Wagens (20) angeordnet sind, wobei die vertikalen Achsen (24, 31) der Werkzeuge (23, 30) zwischeneinander einen im Wesentlichen längs verlaufenden Mittelgang (50) auf dem Wagen (20) definieren, dass der Wagen einen im Wesentlichen längs verlaufenden Mittelbereich (51) aufweist, der den Mittelgang (50) einschließt und im Wesentlichen symmetrisch zur Mittellängsebene (P) des Wagens (20) angeordnet ist, wobei die Querabmessung des Mittelbereichs gleich dem N-fachen der Querabmessung des Mittelgangs (50) ist, wobei N zwischen 1,4 und 2, vorzugsweise zwischen 1,4 und 1,7, beispielsweise etwa 1,5, beträgt, und dass der Wagen mehrere Zusatzwerkzeuge (23, 30, 33) anderer Typen umfasst, die dazu angeordnet sind, jeweils in eine Zelle (8) eingeführt zu werden, um andere Funktionen zu erfüllen, und jeweils eine im Wesentlichen vertikale Achse (24, 31, 34) umfassen, wobei jedes dieser Zusatzwerkzeuge anderer Typen so auf dem Wagen (20) angeordnet ist, dass sich seine vertikale Achse im Mittelbereich (51) und vorzugsweise im Mittelgang (50) befindet.

2. Wagen nach Anspruch 1, **dadurch gekennzeichnet, dass** die Zusatzwerkzeuge zumindest ein erstes und ein zweites Werkzeug (23, 30) eines selben, sich vom ersten Typ unterscheidenden zweiten Typs umfassen, die dazu angeordnet sind, jeweils in eine Zelle (8) eingeführt zu werden, um eine selbe, sich von der ersten Funktion unterscheidende zweite Funktion zu erfüllen, wobei die vertikalen Achsen (24, 31) des ersten und zweiten Werkzeugs (23, 30) des zweiten Typs in der Querrichtung (Y) um einen Abstand (B), der im Wesentlichen gleich dem Achsabstand (d) der Zellen (8) ist, beabstandet sind, wobei das erste und zweite Werkzeug (23, 30) des zweiten Typs zudem im Wesentlichen symmetrisch zur Mittellängsebene (P) des Wagens (20) angeordnet sind.

3. Wagen nach Anspruch 1 oder Anspruch 2, **dadurch gekennzeichnet, dass** die Werkzeuge, die auf dem Wagen (20) angebracht und dazu bestimmt sind, in eine Zelle (8) eingeführt zu werden, zu der Folgendes umfassenden Gruppe gehören: eine Zange (23) zum Greifen der Anoden (10), eine Leitung (30) zum Befüllen der Zellen (8) mit Grus, ein Rohr (33) zum Absaugen des in einer Zelle (8) enthaltenen Gruses.

4. Wagen nach Anspruch 3, **dadurch gekennzeichnet, dass** er zumindest zwei Greifzangen (23) und/oder zumindest zwei Befüllleitungen (30) umfasst.

5. Wagen nach einem der Ansprüche 1 bis 4, **dadurch gekennzeichnet, dass** er ein einziges Rohr (33) zum Absaugen des in einer Zelle (8) enthaltenen Gruses umfasst, wobei das Saugrohr (33) eine im Wesentlichen vertikale Achse (34) aufweist, die sich im Wesentlichen in derselben vertikalen Längsebene wie die vertikale Achse (24, 31) eines der Werkzeuge (23, 30) des ersten Typs befindet.

6. Wagen nach einem der Ansprüche 1 bis 5, **dadurch gekennzeichnet, dass** er ferner eine Hubvorrichtung (41) umfasst, die einen Haken (42) aufweist, wobei der Haken (42) im Mittelbereich (51) und vorzugsweise im Mittelgang (50) angeordnet ist.

7. Wagen nach einem der Ansprüche 1 bis 6, **dadurch gekennzeichnet, dass** er ferner einen Trichter (43) zur Aufbewahrung von Grus mit einer im Wesentlichen vertikalen Achse (44) umfasst, wobei sich diese Achse (44) im Mittelbereich (51) und vorzugsweise im Mittelgang (50) befindet.

8. Wagen nach einem der Ansprüche 1 bis 7, **dadurch gekennzeichnet, dass** er ferner einen auf dem Wagen (20) in einer zur Mittellängsebene (P) des Wagens (20) im Wesentlichen zentrierten Weise angeordneten Steuerstand (40) umfasst, wobei der Steuerstand (40) vorzugsweise im Wesentlichen im Mittelbereich (51) angeordnet ist.

9. Wagen nach Anspruch 8, **dadurch gekennzeichnet, dass** der Steuerstand (40) in der Längsrichtung (X) zwischen einer oder mehreren Leitungen (30) zum Befüllen der Zellen (8) mit Grus und einer oder mehreren Zangen (23) zum Greifen der Anoden (10) angeordnet ist.

10. Wagen nach Anspruch 8 oder 9, **dadurch gekennzeichnet, dass** der Steuerstand (40) einen Sitz (52) umfasst, der um eine im Wesentlichen vertikale Achse schwenkbar ist, wobei der Sitz (52) so ausgerichtet werden kann, dass er zumindest bei der Ausführung des der Funktion des Werkzeugs (23) entsprechenden Vorgangs einer vertikalen Querebene in Richtung eines der Werkzeuge (23) gegenüberliegt.

11. Wagen nach einem der Ansprüche 1 bis 10, **dadurch gekennzeichnet, dass** er ferner Geräte (35 - 38) umfasst, die dazu vorgesehen sind, die Funktion der Werkzeuge (23, 30) zu ermöglichen, jedoch nicht in eine der Zelle (8) eingeführt zu werden, wobei diese Geräte (35 - 38) auf dem Wagen (20) außerhalb des Mittelgangs (50) und vorzugsweise außerhalb des Mittelbereichs (51) angeordnet sind.

12. Wagen nach Anspruch 11, **dadurch gekennzeichnet, dass** die Geräte (35-38) auf dem Wagen (20) auf einer selben Seite des Mittelgangs (50) oder des Mittelbereichs (51) angeordnet sind.

13. Wagen nach Anspruch 11 der 12, **dadurch gekennzeichnet, dass** die Geräte zu der Folgendes umfassenden Gruppe gehören: eine Pumpe (35), eine Kühlvorrichtung (36), ein Saugtrichter (37), ein Filter (38).

**14.** Maschine zum Betrieb eines Ofens (3) in einer Anlage (1) zur Befeuerung bzw. zum Brennen von Anoden (10) für die Aluminiumelektrolyse, wobei der Ofen (3) eine Mehrzahl von Kammern (4) umfasst, die sich in einer Querrichtung (Y) erstrecken und nebeneinander in einer Längsrichtung (X) angeordnet sind, wobei jede Kammer (4) eine Mehrzahl von Zellen (8) aufweist, die sich jeweils im Wesentlichen in der Längsrichtung (X) erstrecken und in der Querrichtung (Y) nebeneinander angeordnet sind, wobei die Maschine (15) Folgendes umfasst:

- einen Laufkran (16), der zwei sich quer erstreckende Träger (17) aufweist und dazu ausgelegt ist, sich in der Längsrichtung über die Zellen (8) zu bewegen;
- einen Wagen (20) nach einem der Ansprüche 1 bis 13, wobei der Wagen (20) quer bewegbar an den beiden Trägern (17) des Laufkrans (16) angebracht ist.

**15.** Maschine nach Anspruch 14, **dadurch gekennzeichnet, dass** der Längsabstand zwischen den beiden Trägern (17) des Laufkrans (16) definiert ist durch:

$$D = E + F + G + H + 1 + J + K + L + M$$

wobei in Längsrichtung (X):

F das halbe Maß einer auf dem Wagen (20) angebrachten Zange (23) zum Greifen der Anoden (10) ist;
H die Abmessung eines auf dem Wagen (20) angebrachten Steuerstands (40) ist;
J die Abmessung einer auf dem Wagen (20) angebrachten Leitung (30) zum Befüllen der Zellen (8) mit Grus ist;
L die Abmessung eines auf dem Wagen (20) angebrachten Rohrs (33) zum Absaugen des in einer Zelle (8) enthaltenen Gruses ist;
E, G, I, K, M jeweils funktionelle Spiele zwischen einem Träger (17) und der benachbarten Greifzange (23), der Greifzange (23) und dem Steuerstand (40), dem Steuerstand (40) und der Befüllleitung (30), der Befüllleitung (30) und dem Saugrohr (33) bzw. dem Saugrohr (33) und dem benachbarten Träger (17) sind.

**16.** Anodenbefeuerungs- bzw. Anodenbrennanlage (10) für die Aluminiumelektrolyse, umfassend :

- ein Gebäude (2), in dem sich ein Ofen (3) zur Befeuerung bzw. zum Brennen von Anoden befindet, wobei der Ofen (3) eine Mehrzahl von Kammern (4) umfasst, die sich in einer Querrichtung (Y) erstrecken und in einer Längsrichtung (X) nebeneinander angeordnet sind, wobei jede Kammer (4) eine Mehrzahl von Zellen (8) aufweist, die sich jeweils im Wesentlichen in der Längsrichtung (X) erstrecken und in der Querrichtung (Y) nebeneinander angeordnet sind;
- eine Maschine (15) nach Anspruch 14 oder 15, wobei der Laufkran (16) längs beweglich auf Längsschienen (11, 12), die in der Nähe zweier quer verlaufender Außenwände (13, 14) des Gebäudes (2) vorgesehen sind, angebracht ist.

**17.** Anlage nach Anspruch 16, **dadurch gekennzeichnet, dass** die Querabmessung des Wagens (20) definiert ist durch: Ly = 2A - B + 2C,
wobei in der Querrichtung:

A der Zellennäherungsabstand, d. h. der Abstand zwischen einer Längsschiene (11, 12) und der Mittellängsebene der zur Schiene (11, 12) benachbarten Außenzelle (8), ist;
B der Abstand zwischen den vertikalen Achsen (24, 31) des ersten und zweiten Werkzeugs (23, 30) des ersten Typs ist, der im Wesentlichen gleich dem Achsabstand (d) der Zellen (8) ist;
C die zulässige Überschreitung, d. h. der Abstand zwischen einer Längsschiene (11, 12) und der jeweiligen quer verlaufenden Außenwand (13, 14) des Gebäudes (2), ist.

**Claims**

**1.** Carriage for the operation of a furnace (3) in a facility (1) for baking anodes (10) for the electrolysis of aluminum, the furnace (3) comprising a plurality of cells (8) each extending substantially in a longitudinal direction (X) and arranged one beside the other in a transverse direction (Y), the center-to-center distance (d) of the cells (8) - defined as the transverse distance between the median longitudinal planes of two adjacent cells (8) - being substantially constant, the carriage (20) being designed to move in the transverse direction (Y) above the cells (8) and having a median longitudinal plane (P), the carriage (20) having at least a first and second tool (23, 30) of a same first type, each arranged to be inserted into a cell (8) to fulfill a same first function, and each having a substantially vertical axis (24, 31), the vertical axes (24, 31) of said first and second tools (23, 30) of the first type being spaced, in the transverse direction (Y) by a distance (B) substantially equal to the center-to-center distance (d) of cells (8), **characterized in that** the vertical axes (24, 31) of said first and second tools (23, 30) of the first type are arranged substantially symmetrically relative to the median longitudinal plane (P) of the carriage (20), the vertical axes (24, 31) of said tools (23, 30) defining between them a substantially longitudinal central corridor (50) on the carriage (20), **in that** the carriage has a substantially longitudinal central area (51) that includes the central corridor (50) and which is arranged substantially symmetrically to the median longitudinal plane (P) of the carriage (20), the transverse dimension of the central area being equal to N times the transverse dimension of the central corridor (50), N being between 1.4 and 2, preferably between 1.4 and 1.7, for example of the order of 1.5, and **in that** the carriage has a number of additional tools (23, 30, 33) of other types, each arranged to be inserted into a cell (8) to perform other functions, and each having a substantially vertical axis (24, 31, 34), each of these additional tools of other types being arranged on the carriage (20) so that its vertical axis is located in the central area (51), and preferably in the central corridor (50).

2. Carriage according to claim 1, **characterized in that** the additional tools comprise at least a first and a second tool (23, 30) of a same second type, different from the first type, each arranged to be inserted into a cell (8) to perform a same second function, different from the first function, the vertical axes (24, 31) of said first and second tools (23, 30) of the second type being spaced, in the transverse direction (Y) by a distance (B) substantially equal to the center-to-center distance (d) between the cells (8), said first and second tools (23, 30) of the second type further being arranged substantially symmetrically relative to the median longitudinal plane (P) of the carriage (20).

3. Carriage according to claim 1 or claim 2, **characterized in that** the tools mounted on the carriage (20) and intended to be inserted into a cell (8) belong to the group comprising: an anode (10) gripper (23), a duct (30) for filling the cells (8) with coal dust, a pipe (33) for sucking the coal dust contained in a cell (8).

4. Carriage according to claim 3, **characterized in that** it comprises at least two grippers (23) and / or at least two filling ducts (30).

5. Carriage according to one of claims 1 to 4, **characterized in that** it comprises a single suction pipe (33) for the coal dust contained in a cell (8), said suction pipe (33) having a substantially vertical axis (34) which is located substantially in the same longitudinal vertical plane as the vertical axis (24, 31) of one of the tools (23, 30) of the first type.

6. Carriage according to one of claims 1 to 5, **characterized in that** it further comprises a lifting device (41) including a hook (42), said hook (42) being arranged in the central area (51), and preferably in the central corridor (50).

7. Carriage according to one of claims 1 to 6, **characterized in that** it further comprises a hopper (43) for storing coal dust having a substantially vertical axis (44), said axis (44) being located in the central area (51), and preferably in the central corridor (50).

8. Carriage according to one of claims 1 to 7, **characterized in that** it further comprises a control station (40) arranged on the carriage (20) so as to be substantially centered with respect to the median longitudinal plane (P) of the carriage (20), the control station (40) being preferably arranged substantially in the central area (51).

9. Carriage according to claim 8, **characterized in that** the control station (40) is arranged in the longitudinal direction (X) between one or more duct(s) (30) for filling the cells (8) with coal dust and one or more anode (10) grippers (23).

10. Carriage according to claim 8 or 9, **characterized in that** the control station (40) includes a seat (52) which can rotate about a substantially vertical axis, the seat (52) can thus be rotated to face a transverse vertical plane in the direction of one of the tools (23), at least when performing the operation corresponding to the function of said tool (23).

11. Carriage according to any of claims 1 to 10, **characterized in that** it further comprises devices (35-38) designed to enable the operation of said tools (23, 30) but not to be inserted into a cell (8), these devices (35-38) being arranged on the carriage (20) outside the central corridor (50), and preferably outside the central area (51).

12. Carriage according to claim 11, **characterized in that** said devices (35-38) are arranged on the carriage (20) on the same side of the central corridor (50), or the central area (51).

**13.** Carriage according to claim 11 or 12, **characterized in that** said devices belong to the group comprising: a pump (35), a cooling device (36) a suction hopper (37), a filter (38).

**14.** Machine for operating a furnace (3) in a facility (1) for baking anodes (10) for the electrolysis of aluminum, the furnace (3) comprising a plurality of chambers (4) extending in a transverse direction (Y) and arranged next to each other in a longitudinal direction (X), each chamber (4) having a plurality of cells (8) each extending substantially along the longitudinal direction (X) and arranged one beside the other in the transverse direction (Y), the machine (15) comprising:

> - an overhead traveling crane (16) comprising two beams (17) extending transversely, the crane being designed to move in the longitudinal direction above the cells (8);
> - a carriage (20) according to one of claims 1 to 13, the carriage (20) being mounted to be mobile transversely on the two beams (17) of the overhead traveling crane (16)

**15.** Machine according to claim 14, **characterized in that** the longitudinal distance between the two beams (17) of the overhead traveling crane (16) is defined by:

$$D = E + F + G + H + I + J + K + L + M$$

where, in the longitudinal direction (X):

> F is half the dimension of an anode (10) gripper (23) mounted on the carriage (20);
> H is the dimension of a control station (40) mounted on the carriage (20) J is the dimension of a duct (30) mounted on the carriage (20) for filling the cells (8) with coal dust;
> L is the dimension of a suction pipe (33) mounted on the carriage (20) for sucking the coal dust contained in a cell (8);
> E, G, I, K, M are respectively functional clearances between a beam (17) and the adjacent gripper (23), the gripper (23) and the control station(40), the control station (40) and the filling duct (30), the filling duct (30) and the suction pipe (33), the suction pipe (33) and the adjacent beam (17).

**16.** Anode (10) baking facility for the electrolysis of aluminum, comprising:

> - a building (2) in which is located an anode baking furnace (3), the furnace (3) comprising a plurality of chambers (4) extending in a transverse direction (Y) and arranged one beside the other in a longitudinal direction (X), each chamber (4) having a plurality of cells (8) each extending substantially in the longitudinal direction (X) and arranged next to each other in the transverse direction (Y).
> - a machine (15) according to claim 14 or 15, the overhead traveling crane (16) being mounted to be mobile longitudinally on longitudinal rails (11, 12) provided in the vicinity of two transverse end walls (13, 14) of the building (2).

**17.** Facility according to claim 16, **characterized in that** the transverse dimension of the carriage (20) is defined by: Ly = 2A - B + 2C,
where, in the transverse direction:

> A is the cell approach distance, i.e. the distance between a longitudinal rail (11, 12) and the longitudinal median plane of the end cell (8) adjacent to said rail (11, 12);
> B is the distance between the vertical axes (24, 31) of said first and second tools (23, 30) of the first type, substantially equal to the center-to-center distance (d) of the cells (8);
> C is the authorized overrun, i.e. the distance between a longitudinal rail (11, 12) and the corresponding transverse end wall (13, 14) of the building (2).

**Fig. 1**

**Fig. 2**

Fig. 3

Fig. 5

Fig. 4

Fig. 6

Fig. 7

Fig. 9

Fig. 8

**Fig. 10**

**Fig. 11**

**Fig. 12**